(19) **Europäisches Patentamt**

**European Patent Office**

**Office européen des brevets**

(11) Veröffentlichungsnummer : **0 105 558 B1**

(12) **EUROPÄISCHE PATENTSCHRIFT**

(45) Veröffentlichungstag der Patentschrift :
**12.11.86**

(21) Anmeldenummer : **83201377.5**

(22) Anmeldetag : **27.09.83**

(51) Int. Cl.⁴ : **A 22 C 11/02, A 22 C 13/00**

(54) **Verfahren zum Herstellen von schlauchförmigen Verpackungshüllen von einer endlosen Folienbahn.**

(30) Priorität : **02.10.82 DE 3236553**

(43) Veröffentlichungstag der Anmeldung :
**18.04.84 Patentblatt 84/16**

(45) Bekanntmachung des Hinweises auf die Patenterteilung : **12.11.86 Patentblatt 86/46**

(84) Benannte Vertragsstaaten :
**AT BE CH DE FR GB IT LI NL SE**

(56) Entgegenhaltungen :
**EP-A- 0 068 578**
**CH-A-    473 004**
**DE-A- 1 411 489**
**FR-A- 2 101 614**
**FR-A- 2 330 064**

(73) Patentinhaber : **Niedecker, Herbert, Dipl.-Ing.**
**Am Ellerhang 6**
**D-6240 Königstein 2 (DE)**

(72) Erfinder : **Niedecker, Herbert, Dipl.-Ing.**
**Am Ellerhang 6**
**D-6240 Königstein 2 (DE)**

(74) Vertreter : **Fischer, Ernst, Dr.**
**Reuterweg 14**
**D-6000 Frankfurt am Main 1 (DE)**

## Beschreibung

Die Erfindung betrifft ein Verfahren zum Herstellen von schlauchförmigen Verpackungshüllen, insbesondere Wursthüllen, von einer endlosen Folienbahn auf einem Füllrohr, anschließendem Füllen der Verpackungshülle mit Wurstbrät oder dgl. sowie Abteilen und Verschließen von Portionspackungen, insbesondere von Würsten.

Es ist bekannt (DT-A-14 11 489), zum Füllen und Verschließen von Würsten den für die Wurst benötigten Darm von einer Folienrolle abzuziehen und auf einem Füllrohr herzustellen, und zwar in der Weise, daß die Folie auf dem Füllrohr über eine Formschulter zu einem Schlauch mit überlappenden Kanten gebildet wird, die anschließend verschweißt werden. Hierbei wird die Wursthülle beim Füllen durch den Fülldruck vom Füllrohr abgezogen und portionsweise gefüllt und vor dem Füllrohrende verschlossen.

Mit dieser Arbeitsweise können nur Würste mit verhältnismäßig dünnflüssigem Füllgut hergestellt werden, die wegen schlaffer Füllung in einem gesonderten Arbeitsgang nachgeschrumpft werden müssen, wodurch eine pralle Wurst erreicht wird. In der am 5.1.1983 veröffentlichten EP-A-0068578 ist für ein Verfahren gem. obiger Einleitung vorgeschlagen worden, auf dem Füllrohrende eine an sich bekannte Schlauchbremse anzuordnen, um die erwünschte pralle Füllung ohne Nachschrumpfen zu erzielen und einen Rückfluß des dünnflüssigen Füllgutes zu vermeiden. Damit die gerade hergestellte Schlauchhülle beim Abziehen nicht durch den Fülldruck belastet wird, ist in dieser älteren Anmeldung weiter vorgeschlagen, daß durch die Folientransportvorrichtung ein ausreichender Darmvorrat vor der Schlauchbremse für den Füllvorgang lose zur Verfügung steht. Hierbei ist insbesondere vorgesehen, daß ein durch kontinuierlichen Transport gebildeter Darmvorrat abgeschaltet wird, wenn sich ein größerer Darmvorrat gebildet hat als für den Füllvorgang benötigt wird.

Bei dieser Arbeitsweise ist aber ein weiterer Nachteil der aus DT-A-14 11 489 bekannten Vorrichtung nicht beseitigt, nämlich daß diese als eine Gesamtvorrichtung zum Herstellen, Füllen und Verschließen der Verpackungshülle nicht variierbar ist, also die Füll- und Verschließvorrichtung nicht alternativ zum Herstellen von Würsten von Darmraupen verwendet werden kann. Deshalb besteht ein Bedürfnis, das Aggregat zur Herstellung von schlauchförmigen Verpackungshüllen von einer endlosen Folienbahn auf einem Füllrohr mit einer vorgeschalteten Füll- und einer nachgeschalteten Verschließmaschine nach Bedarf — z. B. wenn für bestimmte Verpackungsgüter eine Schlauchhülle aus einer preiswerten Folienbahn erwünscht ist — sinnvoll zusammenwirken zu lassen oder die Füll- und Verschließkombination zum Füllen von Würsten aus Darmraupen verwenden zu können. Beim Herstellen von Verpackungshüllen von einer endlosen Folienbahn und dem Einfügen eines entsprechenden Aggregats zwischen einer Füll- und einer Verschließmaschine ist aber noch eine getrennte Einzelmaschinenbedienung erforderlich, die an die Aufmerksamkeit des Bedienungspersonals hohe Anforderungen stellt, damit eine ausreichende Abstimmung zwischen Folienherstellung, Füllvorgang und Verschließvorgang gewährleistet ist. Dies ist außerdem aus Sicherheitsgründen unerwünscht. Der Erfindung liegt daher die Aufgabe zugrunde, die Herstellanlage für schlauchförmige Verpackungshüllen von einer endlosen Folienbahn auf einem Füllrohr mit einer vorgeschalteten Füllmaschine und einer nachgeschalteten Verschließmaschine zu einer Gesamtanlage so zu verbinden, daß eine zentrale Bedienung mit automatischem Ablauf der einzelnen Arbeitsgänge erreicht wird.

Diese Aufgabe wird erfindungsgemäß dadurch gelöst, daß der in der älteren Anmeldung vom Schlauchvorrat ausgelöste Schalter als Steuereinrichtung ausgebildet ist, die außerdem die Füllmaschine und die Verschließmaschine in Abhängigkeit vom Schlauchvorrat steuert. Durch diese Verkettung von Schlauchherstellanlage mit Füll- und Verschließmaschine kann aus den Einzelaggregaten eine kombinierte Gesamtanlage geschaffen werden, deren Einzelaggregate in Abhängigkeit voneinander zusammenwirken, wobei der auf dem Füllrohr durch den Schlauchtransport gebildete Schlauchvorrat als zentrales auslösendes Element für den Betrieb der Gesamtanlage dient. In einer bevorzugten Ausführungsform kann die vom Schlauchvorrat ausgelöste Steuereinrichtung außerdem den Abzug für die endlose Folienbahn steuern.

Eine Vorrichtung zur Durchführung des erfindungsgemäßen Verfahrens besteht vorzugsweise aus einem auf dem Füllrohr verschiebbaren Anschlag, der vorzugsweise aus einer das Füllrohr umfassenden Stauhülse bestehen kann. Die Aufnahme des Anschlags wird in einer verschiebbaren Führung gehalten, wobei der Anschlag durch den Schlauchvorrat in Füllrichtung gegen eine einstellbare Rückstellkraft verschoben wird. Der Anschlag löst ein oder mehrere Schaltelemente zur Steuerung des Schlauchtransports, der Füllmaschine und der Verschließmaschine und gegebenenfalls des Antriebs für den Abzug der endlosen Folienbahn aus.

Der Vorteil der erfindungsgemäßen Verbindung der kombinierten Einzelaggregate besteht darin, daß das Aggregat zur Herstellung des Schlauchs aus der Gesamtanlage herausgenommen werden kann, wenn für die Herstellung der Portionspackungen vorgefertigte Raupen zur Verfügung stehen, und der Schlauch nicht auf dem Füllrohr aus einer flachen Folie hergestellt wird. In diesem Fall werden die Füllmaschine und die Verschließmaschine unmittelbar ohne das

Schlauchherstellaggregat verbunden.

Die Einzelheiten der Arbeitsweise des erfindungsgemäßen Verfahrens und der Vorrichtung zur Durchführung des Verfahrens werden in den Abbildungen beschrieben.

Figur 1 zeigt eine Seitenansicht der Gesamtanlage aus Schlauchherstellanlage in Verbindung mit einer vorgeschalteten Füllmaschine und einer nachgeschalteten Verschließmaschine,

Figur 2 zeigt die durch den Schlauchvorrat betätigte Steuereinrichtung für die Schlauchherstellanlage.

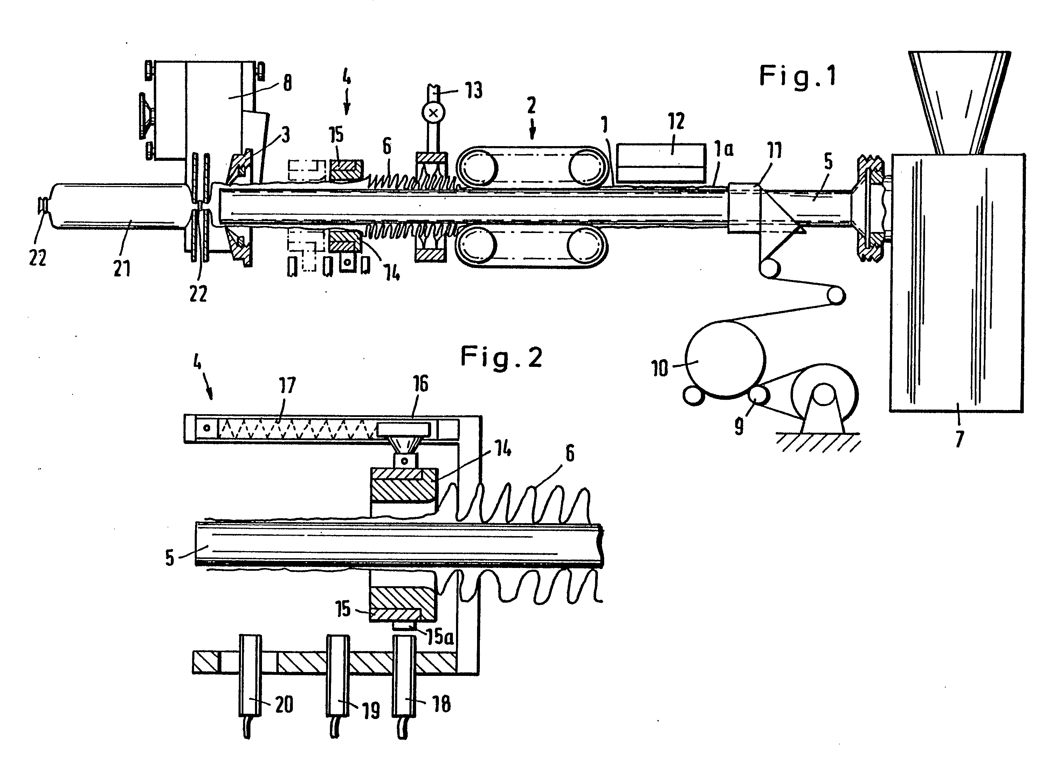

In Fig. 1 wird die geschweißte Schlauchhülle 1 durch den Schlauchtransport 2 in Richtung Schlauchbremse 3 gefördert. Zwischen dem Schlauchtransport 2 und der Schlauchbremse 3 ist die Steuereinrichtung 4 vorgesehen, die abhängig von dem auf dem Füllrohr 5 gebildeten Schlauchvorrat 6, die vorgeschaltete Füllmaschine 7, die nachgeschaltete Verschließmaschine 8 und Antrieb 9 der Folienrolle 10 steuert.

Der von der Formschulter 11 gebildete Schlauch 1a wird durch die Schweißeinrichtung 12 zur Schlauchhülle 1 verbunden und kann anschließend durch die Einrichtung 13 mit einem kühlenden und/oder die Reibung herabsetzenden Medium benetzt werden.

Die in Fig. 2 größer dargestellte Steuereinrichtung 4 besteht aus dem Anschlag 14, dessen Innendurchmesser größer als der des Füllrohres 5, aber kleiner als der Außendurchmesser des Schlauchvorrates 6 ist.

Der Anschlag 14 wird in einer Aufnahme 15 gehalten, die wiederum in einer Führung 16 gegen die Rückstellkraft einer Feder 17 verschiebbar gelagert ist.

Der Anschlag 14 ist entsprechend dem Füllrohrdurchmesser austauschbar. Durch die Bildung des Schlauchvorrates 6 wird der Anschlag 14 gegen die Rückstellkraft der Feder 17 verschoben und überfährt dabei die Schaltelemente 18, 19, 20.

Die Wirkungsweise und Beeinflussung des Schlauchvorrates 6 auf die Gesamtanlage ist folgende :

Durch die Betätigung eines Einschalters an einem nicht gezeigten Steuerpult, das zweckmäßigerweise an der Schlauchherstellanlage angebracht ist, werden der Schlauchtransport 2, die Schweißeinrichtung 12 und der Antrieb 9 der Folienrolle 10 gleichzeitig eingeschaltet. Es wird dadurch die Schlauchhülle 1 gebildet, die durch den Schlauchtransport 2 auf dem Füllrohr 5 in Richtung Schlauchbremse 3 geschoben wird.

An dem Anschlag 14 beginnt sich die Schlauchhülle 1 zu stauen und bildet einen Schlauchvorrat 6. Mit zunehmender Bildung des Schlauchvorrates 6 wird der Anschlag 14 gegen die Rückstellkraft der Feder 17 verschoben. Dabei verläßt die als Kontaktgeber 15a ausgebildete Aufnahme 15 die Ausgangsposition am Schaltelement 18 und erreicht das Schaltelement 19. Dieses Schaltelement 19 schaltet bei Betätigung durch den Kontaktgeber 15a der Aufnahme 15 die Schlauchherstellanlage ab, d. h. der Schlauchtransport 2, die Schweißeinrichtung 12 und der Antrieb 9 der Folienrolle 10 werden ausgeschaltet.

Mit der Betätigung des Schaltelements 19 und damit dem Vorhandensein eines bestimmten Schlauchvorrates 6 werden die vorgeschaltete Füllmaschine 7 und die nachgeschaltete Verschließmaschine 8 betriebsbereit geschaltet. Die Füllmaschine 7 kann auch bei bestimmten Anforderungen an die Gewichtsgenauigkeit der Portionspackung 21 durch eine andere Füll einrichtung, z. B. eine Pumpe kombiniert mit einem Portioniergerät, ersetzt werden.

Mit der Betriebsbereitschaft der einzelnen Aggregate kann die Gesamtanlage produzieren. Nun wird am Steuerpult ein weiterer Schalter betätigt, der die Gesamtanlage einschaltet, worauf die Füllmaschine 7 die eingestellten Portionen ausstößt. Der Schlauchtransport 2, die Schweißeinrichtung 12 und der Antrieb 9 der Folienrolle 10 werden wieder eingeschaltet und bilden zusätzlichen Darmvorrat 6. Durch den Fülldruck beim Füllen der Portionen wird soviel Schlauchhülle 1 aus dem Darmvorrat 6 entnommen, wie für die jeweiligen Portionspackungen 21 benötigt wird. Die Verschließmaschine 8 verschließt im Takt der ausgestoßenen Portionen der Füllmaschine 7 die Portionspackungen 21 mit einer Verschlußklammer 22.

Während der kontinuierlichen Herstellung der Portionspackungen 21 wird weiterer Schlauchvorrat 6 gebildet, d. h. die Aufnahme 15 bewegt sich zum Schaltelement 20 hin. Wenn der Kontaktgeber 15a der Aufnahme 15 das Schaltelement 20 erreicht, wird die Schlauchherstellanlage abgeschaltet und der Schlauchvorrat 6 durch das Füllen der Portionspackungen 21 soweit abgebaut, bis die Aufnahme 15 durch die Rückstellfeder 17 wieder zum Schaltelement 19 zurückgeschoben ist. Jetzt wird durch den Kontaktgeber 15a die Schlauchherstellanlage wieder eingeschaltet. Die Geschwindigkeit des Schlauchtransports 2 ist geringfügig schneller als der Abbau des Schlauchvorrates 6 durch das Füllen der Portionspackungen 21.

Bei Störungen in der Schlauchherstellanlage, z. B. durch Abreißen der Folie, wird der Schlauchvorrat 6 soweit verbraucht, bis die Aufnahme 15 das Schaltelement 18 erreicht und der Kontaktgeber 15a die Gesamtanlage abschaltet.

**Patentansprüche**

1. Verfahren zum Herstellen von schlauchförmigen Verpackungshüllen von einer endlosen Folienbahn durch Verbindung ihrer Randbereiche auf einem Füllrohr, anschließendem portionsweisen Füllen der schlauchförmigen Verpackungshüllen und Verschließen dieser gefüllten Portionspackungen, dadurch gekennzeichnet, daß auf dem Füllrohrende eine Schlauchbremse angeordnet ist und durch den Schlauchtransport auf dem Füllrohr ein Schlauchvorrat lose zusammengeschoben zur Verfügung steht, und daß der Schlauchvorrat eine Steuereinrichtung betätigt, die den Schlauchtransport, die Füllmaschine und die Verschließmaschine in Abhängigkeit vom Schlauchvorrat steuert.

2. Verfahren nach Anspruch 1, dadurch gekennzeichnet, daß die Steuereinrichtung außerdem den Abzug für die endlose Folienbahn schaltet.

3. Vorrichtung zur Durchführung des Verfahrens nach Anspruch 1 oder 2, die ein an einer Füllmaschine (7) angeordnetes Füllrohr (5) und eine dem Füllrohr (5) zugeordnete Einrichtung (11, 12) zur Bildung von schlauchförmigen Verpackungshüllen aus einer endlosen von einer Folienrolle (10) abgezogenen Folienbahn durch Verbindung ihrer Randbereiche auf dem Füllrohr (5) und eine Verschließmaschine (8) aufweist, dadurch gekennzeichnet, daß· am Füllrohrende eine Schlauchbremse (3) angeordnet ist, daß ein Schlauchtransport (2) zum Zusammenschieben eines losen Schlauchvorrats (6) auf dem Füllrohr (5) vorhanden ist, daß eine mit einer Schalteinrichtung (18 bis 20) verbundene Steuereinrichtung (4) zur Erfassung des Schlauchvorrats (6) einen auf dem Füllrohr (5) verschiebbaren Anschlag (14) umfaßt, dessen Aufnahme (15) in einer parallel zur Längsachse des Füllrohr (5) ausgerichteten Führung (16) gehalten wird, und der durch den Schlauchvorrat (6) in Füllrichtung gegen eine einstellbare Rückstellkraft (17) verschiebbar ist, und daß längs des Verschiebewegs des Anschlags (14) ein oder mehrere durch den Anschlag (14) betätigbare Schaltelemente (18, 19, 20) zur Steuerung des Schlauchtransports (2), der Füllmaschine (7), der Verschließmaschine (8) und gegebenenfalls des Antriebs (9) für die Folienrolle (10) angeordnet sind.

4. Vorrichtung nach Anspruch 3, dadurch gekennzeichnet, daß der verschiebbare Anschlag (14) aus einer das Füllrohr (5) umfassenden Stauhülse besteht.

## Claims

1. A process of making tubular wrappers from an endless film web in that edge portions of the web are joined on a filling tube, the tubular wrappers are subsequently formed with batches, and the resulting batch packages are closed, characterized in that a tubing brake is provided on the end of the filling tube, the feeding of the tubing on the filling results in a supply of loosely gathered tubing, which is available on the filling tube, and the supply of tubing actuates a control means for controlling the feeding of the tubing, the filling machine and the closing machine in dependence on the supply of tubing.

2. A process according to claim 1, characterized in that the control device switches also the withdrawal of the endless film web.

3. Apparatus for carrying out the process according to claim 1 or 2, comprising a filling tube (5), which is provided at a filling machine (7), and means (11, 12) which are associated with the filling tube (5) and serve to form tubular wrappers from an endless film web, which is withdrawn from a film roll (10), said wrapper being formed in that the edge portions of the web are joined on the filling tube, said apparatus also comprising a closing machine (8), characterized in that a tubing brake (3) is provided at the end of the filling tube, a tubing feeder (2) is provided for pushing the tubing together so as to form on the filling tube (5) a supply (6) of loosely gathered tubing, a control device (4) is provided, which is connected to switching means (18 to 20) and serves to detect the supply (6) of tubing and includes a stop (14), which is slidable on the filling tube (5) an provided with a holder (15), which is held in a track (16), which extends parallel to the longitudinal axis of the filling tube (5), said stop being adapted to be displaced by the supply (6) of tubing in the filling direction against an adjustable restoring force (17), and one or more switching elements (18, 19, 20) are provided along the path of travel of the stop (14) and are adapted to be actuated by the stop (14) and serve to control the tubing feeder (2), the filling machine (7), the closing machine (8) and, if desired, the drive means (9) for the film roll (10).

4. Apparatus according to claim 3, characterized in that the displaceable stop (14) consists of a restraining sleeve, which surrounds the filling tube (5).

## Revendications

1. Procédé de fabrication d'enveloppes d'emballage tubulaires à partir d'une bande de feuille sans fin par raccordement de ses zones marginales autour d'un tube de remplissage, de remplissage subséquent par portions des enveloppes d'emballage tubulaires et de fermeture de ces emballages de portions remplis, caractérisé en ce qu'un frein pour le tuyau souple est disposé à l'extrémité du tube de remplissage et une réserve de tuyau souple est rendue disponible à l'état librement contracté sur le tube de remplissage par le transporteur du tuyau souple et en ce que la réserve de tuyau souple met en action un mécanisme de commande qui entraîne le transporteur du tuyau souple, la machine de remplissage et la machine de fermeture en fonction de la réserve de tuyau souple.

2. Procédé selon la revendication 1, caractérisé en ce que le mécanisme de commande enclenche, en outre, le prélèvement de la bande de feuille sans fin.

3. Dispositif pour la mise en œuvre du procédé selon l'une quelconque des revendications 1 et 2, lequel comprend un tube de remplissage (5) disposé sur une machine de remplissage (7) et un dispositif (11, 12) adjoint au tube de remplissage (5) et servant à la formation d'enveloppes d'emballage tubulaires à partir d'une bande de feuille sans fin prélevée d'un rouleau de feuille (10) par raccordement de ses zones marginales autour du tube de remplissage (5), ainsi qu'un dispositif de fermeture (8), caractérisé en ce qu'un frein (3) pour le tuyau souple est disposé à l'extrémité du tube de remplissage ; en ce qu'un transporteur (2) du tuyau souple est présent pour contracter une réserve lâche (6) de tuyau souple sur le tube de remplissage (5) ; en ce qu'un mécanisme de commande (4) relié à un dispositif de couplage (18 à 20) et servant à la préhension de la réserve (6) de tuyau souple entoure une butée (14) qui se déplace sur le tube de remplissage (5), dont le logement (15) est maintenu dans un guide (16) aligné parallèlement à l'axe longitudinal du tube de remplissage (5) et qui est déplaçable à l'encontre d'une force de rappel réglable (17) dans le sens du remplissage par la réserve (6) de tuyau souple ; et en ce qu'un ou plusieurs éléments de couplage (18, 19, 20) à mettre en action par la butée (14) et utilisés pour la commande du transporteur (2) du tuyau souple, de la machine de remplissage (7), de la machine de fermeture (8) et, éventuellement, de la commande (9) du rouleau de feuille (10), sont disposés le long de la voie de déplacement de la butée (14).

4. Dispositif selon la revendication 3, caractérisé en ce que la butée déplaçable (14) se compose d'une douille de refoulement entourant le tube de remplissage (5).

Fig.1

Fig.2